# EUROPÄISCHE PATENTSCHRIFT

(11) **EP 1 362 746 B1**
(45) Veröffentlichungstag und Bekanntmachung des Hinweises auf die Patenterteilung: **15.02.2006**
(21) Anmeldenummer: 03005869.7
(22) Anmeldetag: 15.03.2003
(51) Int. Cl.: B60R 19/50, B60Q 1/04

(54) **Stossfänger für Fahrzeuge, insbesondere Kraftfahrzeuge**
Motor vehicle bumper
Pare-chocs pour véhicule automobile

(30) Priorität: 14.05.2002 DE 10221294
(43) Veröffentlichungstag der Anmeldung: 19.11.2003
(73) Patentinhaber: Dr.Ing. h.c.F. Porsche Aktiengesellschaft, 70435 Stuttgart (DE)
(72) Erfinder: Schmid, Markus, 71297 Mönsheim (DE)

(56) Entgegenhaltungen:
- EP-A- 0 548 507
- US-A- 4 070 051
- PATENT ABSTRACTS OF JAPAN vol. 1996, no. 11, 29. November 1996 (1996-11-29) -& JP 08 192699 A (MITSUBISHI MOTORS CORP), 30. Juli 1996 (1996-07-30)

## Beschreibung

Die Erfindung bezieht sich auf einen Stoßfänger für Fahrzeuge, insbesondere Kraftfahrzeuge, der einen formsteifen Träger und eine den Endbereich des Aufbaues bildende elastische Verkleidung umfaßt, wobei in seitlich außenliegende Aufnahmetaschen der Verkleidung jeweils zumindest eine Leuchte eingesetzt und an der Verkleidung in Lage gehalten ist und die Leuchte auf der dem Endbereich zugewandte Seite ein lichtdurchlässiges Abdeckelement aufweist.

Bei Stoßfängern, bei denen innerhalb der Verkleidung zumindest eine Leuchte angeordnet ist, besteht das Problem, daß bei einem 30° Pendelcrash die Leuchte - insbesondere das lichtdurchlässige Abdeckelement - nicht beschädigt werden darf. Zur Erfüllung dieser Anforderung ist es bekannt, neben der Leuchte am formsteifen Träger des Stoßfängers ein Stoßhorn aus Gummi anzuordnen, das durch eine Aussparung der Verkleidung hindurchragt und die Verkleidung nach vorne hin um ein beträchtliches Maß überragt.

Aufgabe der Erfindung ist es, zur Erfüllung der gesetzlichen Forderungen bei einem 30° Pendelcrash eine solche Lösung zu finden, bei der auf ein am formsteifen Träger des Stoßfängers angeordnetes Stoßhorn verzichtet werden kann.

Gelöst wird diese Aufgabe durch die Merkmale des Anspruchs 1. Weitere die Erfindung in vorteilhafter Weise ausgestaltende Merkmale enthalten die Unteransprüche.

Die mit der Erfindung hauptsächlich erzielten Vorteile sind darin zu sehen, daß durch die einstückige Ausbildung eines Horns am lichtdurchlässigen Abdeckelement quasi ein unsichtbares Horn geschaffen wird, mit dem die gesetzlichen Anforderungen bei einem 30° Pendelcrash erfüllt werden. Durch die Anordnung des Horns an einem innenliegenden Randbereich des Abdeckelements wird der theoretische Auftreffpunkt M1 des 30° Pendels nach innen verlagert und es erfolgt eine gute Krafteinleitung in die tragende Struktur des Aufbaus. Das Abdeckelement und das Horn sind vorzugsweise aus schlagfestem Kunststoff, wie Polycarbonat, hergestellt. Bei einer Stoßbelastung auf das Horn stützt sich das Abdeckelement an einer dahinterliegenden Trägerstruktur des Aufbaus ab.

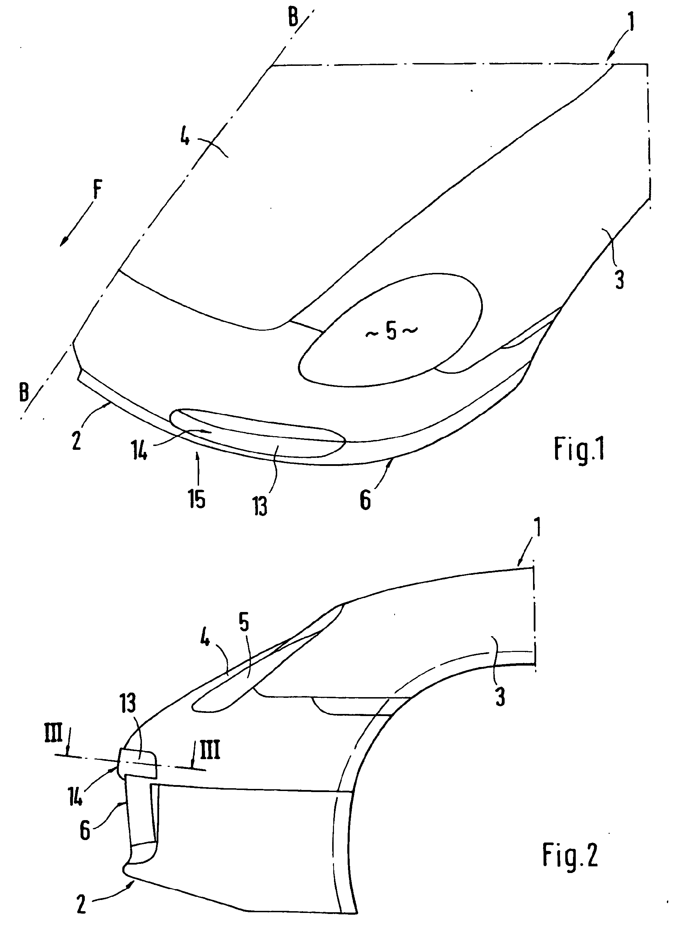

In der Zeichnung ist ein Ausführungsbeispiel der Erfindung dargestellt. Es zeigt
- Fig. 1: eine perspektivische Teilansicht von schräg vorne auf den Bugbereich eines Fahrzeuges,
- Fig. 2: eine Teilseitenansicht des Bugbereiches,
- Fig. 3: einen Horizontalschnitt gem. der Linie III-III der Fig. 2.

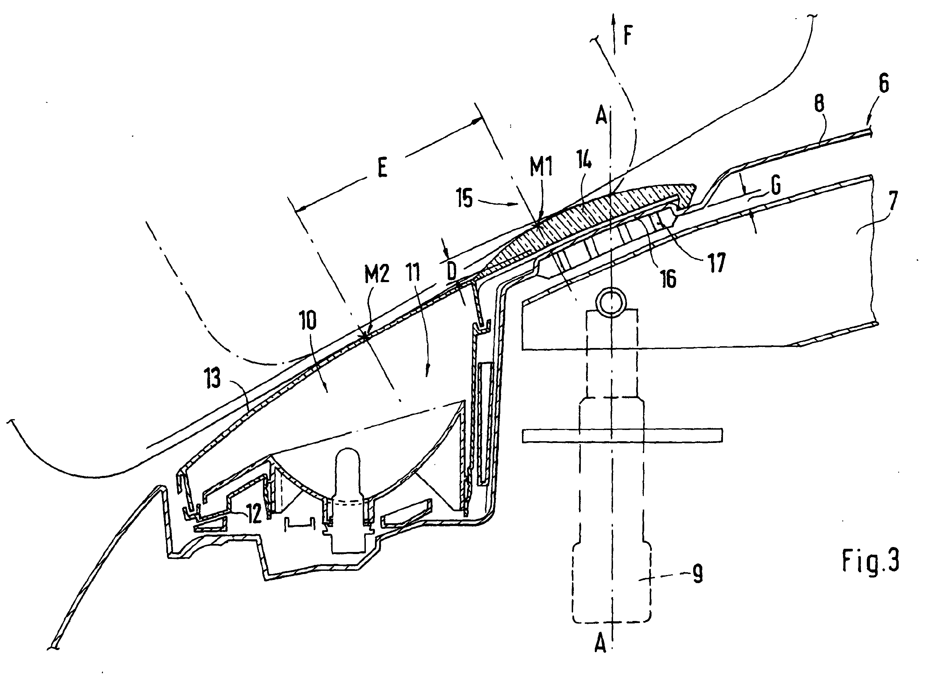

Ein Kraftfahrzeug 1 umfaßt im dargestellten Bugbereich 2 ein Seitenteil 3, eine Haube 4, einen Scheinwerfer 5 und einen Stoßfänger 6. Der Stoßfänger 6 setzt sich aus einem querverlaufenden formsteifen Träger 7 und einer elastischen, den Endbereich des Aufbaues bildenden Verkleidung 8 zusammen. Der querverlaufende Träger 7 ist gem. Fig. 3 unter Vermittlung von hydraulischen Dämpfern 9 am Aufbau in Lage gehalten.

In seitlich außenliegenden Bereichen der Verkleidung 8 sind nischenförmige nach vorne hin offene Aufnahmetaschen 10 vorgesehen, wobei in jede Aufnahmetasche 10 zumindest eine Leuchte 11 eingesetzt und an der Verkleidung 8 durch Schrauben, Klipsen oder dgl. in Lage gehalten ist.

Jede Leuchte 11 umfaßt ein Gehäuse 12 und auf der dem Endbereich zugekehrten Seite ein lichtdurchlässiges Abdeckelement 13. Das Abdeckelement 13 ist über einen nicht näher dargestellten dauerelastischen Kleber mit dem Gehäuse 12 verbunden.

Jede Leuchte 11 umfaßt einen Blinker und/oder einen Nebelscheinwerfer und/oder ein Positionslicht oder dgl.. Im Ausführungsbeispiel erstreckt sich jede Leuchte 11 beiderseits einer in Fahrzeuglängsrichtung verlaufenden Mittellinie A-A des Dämpfers 9.

Erfindungsgemäß ist an jedem Abdeckelement 13 ein - in der Draufsicht gesehen - gegenüber der Kontur der angrenzenden Verkleidung 8 geringfügig vorstehendes Horn 14 vorgesehen, das einstückig mit dem Abdeckelement 13 ausgebildet ist. Das Abdeckelement 13 stützt sich im Bereich des Horns 14 bei einer Stoßbelastung des Stoßfängers 6 an einer dahinterliegenden Trägerstruktur (formsteifer Träger 7) des Aufbaus ab. Das lichtdurchlässige Abdeckelement 13 und das Horn 14 sind aus einem schlagfesten Kunststoff, wie Polycarbonat oder dgl., hergestellt. Um eine gute Krafteinleitung in den Aufbau zu erzielen, ist das Horn 14 an einem einer Fahrzeuglängsmittelebene B-B zugekehrten Randbereich 15 des Abdeckelementes 13 angeordnet (Fig. 3). Das eine geringe Dicke D aufweisende Horn 14 weist in Fahrtrichtung F gesehen einen konvexen Formverlauf auf. Durch die Positionierung des Horns 14 am Randbereich 15 des Abdeckelementes 13 wird der theoretische Auftreffpunkt M1 um ein Maß E gegenüber einer Anordnung ohne Horn nach innen verlagert. In Fig. 3 ist in durchgehenden Linien das Pendel beim Auftreffen auf das Fahrzeug gezeigt, wobei der Punkt M1 den theoretischen Auftreffpunkt am Aufbau darstellt.

In strichpunktierten Linien ist die Lage des Pendels bei einer Anordnung ohne Horn gezeigt mit dem theoretischen Auftreffpunkt M2, der weiter außen liegt als der Auftreffpunkt M1.

Das Abdeckelement 13 liegt im Bereich des vorstehenden Horns 14 mit seiner Rückseite 16 am Gehäuse 12 oder an einer Wandung der Aufnahmetasche 10 der Verkleidung 8 auf. Bei einem 30° Pendelcrash wird die Verkleidung 8 um einen geringen Weg (Spalt G) nach hinten bewegt und stützt sich dann unmittelbar am formsteifen Träger 7 ab (nicht näher dargestellt).

Das Horn 14 erstreckt sich über die gesamte Höhe des Abdeckelements 13, wobei das Horn 14 - in einem Vertikalschnitt gesehen - geradlinig oder gewölbt ausgebildet ist. Durch die Integration des Horns 14 in das Abdeckelement 13 wird quasi ein unsichtbares Horn 14 geschaffen. Die Verkleidung 8 ist im Bereich des Horns 14 auf der dem Träger 7 zugekehrten Seite mit einer Verippung 17 versehen.

## Patentansprüche

1. Stoßfänger für Fahrzeuge, insbesondere Kraftfahrzeuge, der einen formsteifen Träger und eine den Endbereich des Aufbaues bildende elastische Verkleidung umfaßt, wobei in seitlich außenliegende Aufnahmetaschen der Verkleidung jeweils zumindest eine Leuchte eingesetzt und an der Verkleidung in Lage gehalten ist und die Leuchte auf der dem Endbereich zugewandten Seite ein lichtdurchlässiges Abdeckelement aufweist, **dadurch gekennzeichnet, daß** an jedem Abdeckelement (13) örtlich ein gegenüber der angrenzenden elastischen Verkleidung (8) geringfügig vorstehendes, einstückig mit dem Abdeckelement (13) ausgebildetes Horn (14) vorgesehen ist und daß das Abdeckelement (13) im Bereich des Horns (14) bei einem 30° Pendelcrash an einer dahinterliegenden Trägerstruktur (7) des Aufbaues abgestützt ist.

2. Stoßfänger nach Anspruch 1, **dadurch gekennzeichnet, daß** das lichtdurchlässige Abdeckelement (13) und das Horn (14) aus schlagfestem Kunststoff wie Polycarbonat hergestellt sind.

3. Stoßfänger nach den Ansprüchen 1 und 2, **dadurch gekennzeichnet, daß** das Horn (14) an einem einer Fahrzeuglängsmittelebene (B-B) zugekehrten Randbereich (15) des Abdeckelements (13) angeordnet ist.

4. Stoßfänger nach Anspruch 3, **dadurch gekennzeichnet, daß** das Horn (14) in Fahrtrichtung (F) gesehen einen konvexen Formverlauf aufweist.

5. Stoßfänger nach einem der vorangegangenen Ansprüche, **dadurch gekennzeichnet, daß** durch die Anordnung des Horns (14) am innenliegenden Randbereich (15) des Abdeckelements (13) der theoretische Auftreffpunkt eines 30° Pendels nach innen in Richtung Fahrzeuglängsmittelebene (B-B) verlagert wird.

## Claims

1. A bumper for vehicles, especially motor vehicles, comprising a rigid support and a resilient covering forming the end region of the body, wherein at least one light is inserted into respective laterally outer locating compartments in the covering and is held in position on the covering, and the light has a transparent cover on the side facing the end region, **characterised in that** a bead (14), which is formed in one piece with the cover (13) and projects slightly in relation to the adjacent resilient covering (8), is locally provided on each cover (13), and **in that**, in the event of a 30° pendulum crash, the cover (13) is supported in the region of the bead (14) on a supporting structure (7) of the body lying therebehind.

2. A bumper according to claim 1, **characterised in that** the transparent cover (13) and the bead (14) are made from impact-resistant plastics such as polycarbonate.

3. A bumper according to claims 1 and 2, **characterised in that** the bead (14) is arranged on an edge region (15) of the cover (13), the edge region (15) facing a longitudinal central plane (B-B) of the vehicle.

4. A bumper according to claim 3, **characterised in that** the bead (14) has a convex shape when seen in the direction of travel (F).

5. A bumper according to any one of the preceding claims, **characterised in that**, owing to the arrangement of the bead (14) on the inner edge region (15) of the cover (13), the theoretical point of impact of a 30° pendulum movement is displaced inwards in the direction of the longitudinal central plane (B-B) of the vehicle.

## Revendications

1. Pare-chocs pour véhicules, en particulier pour véhicules automobiles, qui comprend un longeron indéformable et un habillage élastique formant la zone d'extrémité de la carrosserie, dans lequel au moins un feu est monté dans des logements latéraux extérieurs du garnissage et est maintenu en position dans le garnissage et le feu comporte un élément de recouvrement transparent du côté dirigé vers la zone d'extrémité, **caractérisé en ce que**, sur chaque élément de recouvrement (13), il est prévu localement un butoir (14) débordant légèrement du garnissage élastique adjacent (8), formé en une seule pièce avec l'élément de recouvrement (13), et **en ce que** l'élément de recouvrement (13) s'appuie dans la zone du butoir (14) sur une structure porteuse (7) de la carrosserie se trouvant derrière en cas de collision pendulaire de 30°.

2. Pare-chocs selon la revendication 1, **caractérisé en ce que** l'élément de recouvrement transparent (13) et le butoir (14) sont fabriqués en une matière synthétique anti-chocs telle que le polycarbonate.

3. Pare-chocs selon les revendications 1 et 2, **caractérisé en ce que** le butoir (14) est disposé dans une zone de bord (15) de l'élément de recouvrement (13) tournée vers un plan médian longitudinal du véhicule (B-B).

4. Pare-chocs selon la revendication 3, **caractérisé en ce que** le butoir (14) présente un tracé convexe, vu dans le sens de marche.

5. Pare-chocs selon l'une quelconque des revendications précédentes, **caractérisé en ce que**, du fait de l'agencement du butoir (14) dans la zone de bord intérieure (15) de l'élément de recouvrement (13), le point d'impact théorique d'un mouvement pendulaire de 30° est déplacé vers l'intérieur dans la direction du plan médian longitudinal du véhicule (B-B).
